# EUROPÄISCHE PATENTANMELDUNG

(11) **EP 4 134 222 A1**
(43) Veröffentlichungstag der Anmeldung: **15.02.2023**
(21) Anmeldenummer: 22175257.9
(22) Anmeldetag: 24.05.2022
(51) Int. Cl.: B29C 49/78, B29C 49/36, B29C 49/42, B29C 49/12, B29C 49/48

(54) **BLASMASCHINE MIT DRUCKANSTEUERUNG WÄHREND DES BLASPROZESSES**

(30) Priorität: 10.08.2021 DE 102021120750
(71) Anmelder: Krones AG, 93073 Neutraubling (DE)
(72) Erfinder: Hoellriegl, Thomas, 93073 Neutraubling (DE); Hengl, Benedikt, 93073 Neutraubling (DE); Betz, Christian, 93073 Neutraubling (DE); Brunner, Andreas, 93073 Neutraubling (DE)
(74) Vertreter: Bittner, Bernhard

(57) **Zusammenfassung**

Blasmaschine mit Druckansteuerung während des BlasprozessesVorrichtung zum Umformen von Kunststoffvorformlingen zu Kunststoffbehältnissen mit einer Transporteinrichtung, welche dazu geeignet und bestimmt ist, die Kunststoffvorformlinge entlang eines vorgegebenen Transportpfads zu transportieren, **wobei** an dieser Transporteinrichtung wenigstens eine Umformungsstation angeordnet ist, welche dazu geeignet und bestimmt ist, die Kunststoffvorformlinge durch Beaufschlagung mit einem gasförmigen Medium zu den Kunststoffbehältnissen umzuformen, **wobei** die Umformungsstation eine Beaufschlagungseinrichtung aufweist, welche die Kunststoffvorformlinge mit dem fließfähigen Medium beaufschlagt, **wobei** die Vorrichtung weiterhin eine Druckbereitstellungseinrichtung aufweist und/oder mit einer Druckbereitstellungseinrichtung in Strömungsverbindung steht, welche dazu geeignet und bestimmt ist, das fließfähige Medium unter einem vorgegebenen Druck (P2) an die Beaufschlagungseinrichtung zur Verfügung zu stellen, **wobei** der von der Druckbereitstellungseinrichtung bereitgestellte Druck (P2) größer ist als der zur Beaufschlagung der Kunststoffvorformlinge benötigte und/oder verwendete Druck (P2), **dadurch gekennzeichnet**, dass die Vorrichtung wenigstens eine Ventileinrichtung aufweist, welche die Beaufschlagung der Kunststoffvorformlinge steuert, **wobei** diese Ventileinrichtung derart gestaltet ist, dass sie die Luftzufuhr in das Behältnis unterbricht, wenn das Druck (P2) des fließfähigen Mediums innerhalb des Behältnisses ein vorgegebenes Druckniveau erreicht hat.

## Beschreibung

Die vorliegende Bindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise Kunststoffvorformlinge in Blasformen gelegt und mittels eines fließfähigen und insbesondere gasförmigen Mediums expandiert.

Zu diesem Zweck ist es üblich, dass der Kunststoffvorformling mit mehreren aufeinander folgenden unterschiedlichen Drücken beaufschlagt wird, um so zu dem Kunststoffbehältnis, wie beispielsweise einer Kunststoffflasche umgeformt zu werden.

Im Stand der Technik werden die benötigten Drücke (P1, Pi, P2) in der Blasmaschine durch Domdruckregler bereitgestellt. Diese Druckregler werden in der Regel durch Proportionalventile vorgesteuert, um dem Bediener eine leichte und schnelle Verstellung der Blasdrücke zu ermöglichen. Des Weiteren können diese Drücke auch außerhalb des Blasrades beispielsweise im stehenden Teil der Maschine oder auch komplett außerhalb der Maschine erzeugt und bereitgestellt werden.

Hier müssen diese erforderlichen Blasdrücke über einen Mediendrehverteiler dem Blasrad zugeführt werden. Dies erfordert aber entsprechende Leitungsquerschnitte oder verursacht einen größeren Druckverlust durch den höheren Volumenstrom.

Die Domdruckregler einschließlich den benötigten Anbauteilen (auch in der Gesamtheit als Reduzierstation bezeichnet) werden im Stand der Technik üblicherweise im oberen Bereich eines drehenden Karussells einer Blasmaschine verbaut. Diese Baugruppen erschweren den Zugang zu einem Bereich der Vorrichtung, etwa einem Karussell. Reduzierstationen haben durch ihre Masse weiterhin einen negativen Einfluss auf den Massenschwerpunkt sowie das Antriebs- und Bremsmoment des Karussells. Die Kosten der Reduzierstationen liegen je nach Ausführung zwischen 1000 € und 2500 €.

Der jeweils benötigte Blasdruck wird über diese Reduzierstationen dem zu blasenden Kunststoffvorformling zugeführt. Dabei strömt zu Beginn der jeweiligen Druckphase beim Öffnen des Blasventils relativ viel Luft in die Flasche, da der Druckunterschied zwischen der jeweiligen Druckstufe und dem Druck in der Flasche relativ groß ist. Je weiter sich der Druck in dem Behältnis dem erforderlichen Druck (z.B. P2) nähert, desto länger dauert es, bis der finale Druck erreicht ist, bzw. bis die Drücke sich angleichen.

Der Druckanstieg pro Zeiteinheit sinkt daher, je weiter sich der Druck in dem Behältnis diesem Druck annähert. Auf diese Weise geht im Stand der Technik sehr viel Zeit verloren.

Der vorliegenden Erfindung liegt daher die Aufgabe zugrunde, zumindest teilweise auf die besagten Reduzierstationen zu verzichten, da sie den Aufbau der Vorrichtung erschweren. Daneben liegt der Erfindung die Aufgabe zugrunde, eine schnellere Expansion der Kunststoffbehälter und/oder der bereits geformten Kunststoffflaschen zu erreichen.

Diese Aufgaben werden erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen und insbesondere Kunststoffflaschen weist eine Transporteinrichtung auf, welche dazu geeignet und bestimmt ist, die Kunststoffvorformlinge entlang eines vorgegebenen Transportpfads zu transportieren. Dabei ist an dieser Transporteinrichtung wenigstens eine Umformungsstation (bzw. Umformungseinrichtung) angeordnet, welche dazu geeignet und bestimmt ist, die Kunststoffvorformlinge durch Beaufschlagung mit einem fließfähigen und insbesondere gasförmigen Medium zu den Kunststoffverhältnissen umzuformen.

Weiterhin weist die Umformungsstation eine Beaufschlagungseinrichtung auf, welche die Kunststoffvorformlinge mit dem fließfähigen (und insbesondere gasförmigen) Medium beaufschlagt, wobei die Vorrichtung weiterhin eine Druckbereitstellungseinrichtung aufweist und/ oder mit einer Druckbereitstellungseinrichtung verbunden ist, welche dazu geeignet und bestimmt ist, das fließfähige Medium unter einem vorgegebenen Druck an die Beauftragungseinrichtung zur Verfügung zu stellen.

Weiterhin ist der von der Druckbereitstellungseinrichtung bereitgestellte Druck höher als der zur Beaufschlagung der Kunststoffvorformlinge benötigte und oder verwendete Druck.

Erfindungsgemäß weist die Vorrichtung wenigstens eine Ventileinrichtung auf, welche die Beaufschlagung der Kunststoffvorformlinge (mit dem fließfähigen und insbesondere gasförmigen Medium) steuert und/oder regelt, wobei diese Ventileinrichtung derart gestaltet ist, dass sie die Zufuhr des fließfähigen und insbesondere gasförmigen Mediums (insbesondere Luft) in und/oder an das Behältnis unterbricht, wenn der Druck des fließfähigen Mediums innerhalb des Behältnisses ein vorgegebenes Druckniveau erreicht hat.

Im Rahmen der Erfindung wird also vorgeschlagen, dass nicht der eingehende Druck, der beispielsweise von einem Druckanschluss oder auch einen Kompressor stammen kann, reduziert wird, sondern ein Ventil bewirkt, dass die Druckzufuhr zu dem Behältnis angehalten wird, wenn ein vorgegebenes Druckniveau erreicht ist.

Bevorzugt ist in dem Strömungspfad zwischen der Druckbereitstellungseinrichtung und der Ventileinrichtung und/oder in dem Strömungspfad zwischen der Druckbereitstellungseinrichtung und einem Druckluftreservoir kein Druck - Reduziereinrichtung vorgesehen.

Die Idee der Erfindung liegt daher darin, entsprechende Ventile und unten genau beschrieben schnell Ventile zu verwenden, um die Behältnisse, sobald ein bestimmter Druck erreicht ist, nicht mehr weiter mit Druckluft zu befüllen.

Wie oben erwähnt, handelt es sich bei dem fließfähigen Medium um ein gasförmiges Medium und insbesondere um Druckluft.

Besonders bevorzugt weist die Umformungsstation eine Blasform auf. Bevorzugt ist diese Blasform wenigstens zweiteilig, bevorzugt dreiteilig ausgebildet, und weist bevorzugt zwei Seitenteile und ein Bodenteil auf, die gemeinsam den Hohlraum ausbilden, innerhalb dessen die Kunststoffvorformlinge zu den Kunststoffbehältnissen und insbesondere Flaschen umgeformt werden.

Bei einer weiteren bevorzugten Ausführungsform weist die Umformungsstation einen stangenartigen Körper und insbesondere eine sogenannte Reckstange auf, die in die Behältnisse eingeführt wird, um diese in ihrer Längsrichtung, zu dehnen.

Besonders bevorzugt weist die Vorrichtung mehrere derartige Umformungsstationen auf. Diese können dabei bevorzugt an der Transporteinrichtung, bei der sich insbesondere um ein Blasrad handelt, angeordnet sein.

Vorteilhaft handelt es sich bei dem vorgegebenen Transportpfad um einen kreis- oder Kreissegmentförmigen Transportpfad. Besonders bevorzugt weist die Transporteinrichtung einen drehbaren Träger auf, an dem die Umformungsstationen angeordnet sind.

Bei einer weiteren bevorzugten Ausführungsform handelt es sich bei der Beaufschlagungseinrichtung um eine Blasdüse, welche an den Kunststoffvorformling und insbesondere eine Mündung des Kunststoffvorformlings angelegt wird, um diesen zu expandieren.

Bevorzugt weist die oder weisen die Umformungsstationen (je) wenigstens einen Ventilblock auf, in den eine Vielzahl von Ventilen integriert ist, welche das Schalten der unterschiedlichen Drücke bzw. das Beaufschlagen der Kunststoffvorformlinge mit unterschiedlichen Drücken durchführen. Bevorzugt weist dieser Ventilblock Blasventile mit sehr kurzen und/oder reproduzierbaren Schaltzeiten auf. Auf diese Weise ist es möglich, von einem höheren Druckniveau aus gezielt Druckluft in das Behältnis strömen zu lassen, und das Ventil rechtzeitig zu schließen, wenn ein vorbestimmtes Druckniveau in dem Behältnis erreicht ist. Dabei ist es möglich, dass das Druckniveau in dem Behältnis durch die Zeitspanne bestimmt wird, in der das Blasventil bzw. die Ventileinrichtung geöffnet ist und durch die vorbestimmten Ventilquerschnitte Gas und insbesondere Druckluft in das Behältnis strömt.

Es wäre daher auch eine Zeitsteuerung der Ventileinrichtung denkbar.

Als Einstellparameter für den Bediener sind Winkelangaben gut geeignet, da diese ganzzahlig oder mit max. einer Kommastelle eingegeben werden. Aus der Drehgeschwindigkeit des Karussells und dem Winkel kann dann durch die Steuerung eine Schaltzeit errechnet werden.

Es wird dabei darauf hingewiesen, dass in der vorliegenden Anmeldung sowohl von Kunststoffvorformlingen, als auch von Kunststoffbehältnissen gesprochen wird. Dies beruht darauf, dass die Kunststoffvorformlinge mit dem hier beschriebenen Verfahren zu den Kunststoffbehältnissen und insbesondere Kunststoffflaschen umgeformt werden und daher auch Übergangssituationen vorhanden sind, bei denen der Kunststoffvorformling bereits teilweise expandiert ist aber noch nicht vollständig zur Flasche ausgebildet ist.

Bei einer bevorzugten Ausführungsform weist die Vorrichtung wenigstens eine Druckerfassungseinrichtung auf, welche einen Druck in den zu expandierenden Kunststoffvorformlingen bzw. in den zu fertigenden Kunststoffbehältnissen bestimmt bzw. erfasst. Dabei kann auch die Druckerfassungseinrichtung bzw. Druckmesseinrichtung in den erwähnten Ventilblock integriert sein.

Bevorzugt wird also ein Druckanstieg durch das oder die in der Blasmaschine verwendete Druckventile, insbesondere durch eine entsprechende Blasdruckaufzeichnung, ermittelt. Dabei kann jede Umformungsstation einen integrierten Drucksensor bzw. eine Druckerfassungseinrichtung aufweisen.

Durch das vorzeitige Schließen des jeweiligen Blasventils bzw. der Ventileinrichtung wird der gewünschte Druck in dem Behältnis erzeugt. Auf diese Weise ist kein eigenes Druckniveau in den dafür benötigten Bauteilen bzw. eine Reduzierstation erforderlich, sondern es kann mit dem maximal zur Verfügung stehenden Druck (z.B. von einem Kunden - Druckluftnetz oder einem Kompressor) versorgt bzw. geblasen werden.

Auf diese Weise wird das Behältnis wesentlich schneller mit dem gewünschten Druck befüllt, da ein höherer Druckunterschied von dem einstellenden Druck zum gewünschten Druckniveau vorhanden ist. D. h., es wird lediglich gewartet, bis der erforderliche Druck, beispielsweise ein Druck P2 sich eingestellt hat.

Da aber sehr viel Luft (Luftmassenstrom) durch den größeren Druckunterschied in das Behältnis strömt, sollten die Blasventile sehr schnell sein, d.h. sehr kurze Schaltzeiten haben.

Bei einer besonderen bevorzugten Ausführungsform weist die Ventileinrichtung eine Schaltzeit auf, die geringer ist als 40 ms, bevorzugt geringer als 30 ms bevorzugt geringer als 25 ms bevorzugt geringer als 20 ms und besonders bevorzugt geringer als 15 ms.

Dabei kann es sich bei der Ventileinrichtung um eine hydraulisch, elektrisch oder besonders bevorzugt pneumatisch betätigte Ventileinrichtung handeln.

Bei einer besonders bevorzugten Ausführungsform ist die Ventileinrichtung aus einer Gruppe von Ventileinrichtungen ausgewählt, welche Pneumatikventile, insbesondere pneumatisch vorgesteuerte und/oder elektrisch angesteuerte Pneumatikventile, elektrisch gesteuerte Pneumatikventile, hydraulische Ventile, insbesondere pneumatisch und/oder elektrisch vorgesteuerte hydraulische Ventile, Magnetventile und dergleichen enthält

Durch die sehr geringen Schaltzeiten kann der benötigte Blasdruck, (beispielsweise ein P2 Druck in das Behältnis) weitgehend genau erreicht werden. Je geringer die Schaltzeit der Ventileinrichtung ist, desto genauer kann der erforderliche Druck erreicht werden. Um z.B. bei sehr keinen Behältern (Flaschen) einem zu schellen Druckanstieg vorzubeugen, kann der Strömungsweg vom Ventil zum Behälter durch eine Drossel (fest oder variable) verengt werden.

Bei einer weiteren bevorzugten Ausführungsform weist die Vorrichtung eine Drucksteuereinrichtung auf, welche dazu geeignet bestimmt ist, den oder die Kunststoffvorformlinge mit mehreren unterschiedlichen Druckstufen zu beaufschlagen. So ist es möglich, dass der Kunststoffvorformling zunächst mit einem Vorblasdruck, anschließend einen Zwischenblasdruck, und anschließend mit einem Fertigglasdruck beaufschlagt wird. Es können auch weitere Druckstufen hinzugefügt werden.

Besonders bevorzugt ist wenigstens eine Ventileinrichtung der oben beschriebenen Art zwischen der höchsten Druckstufe und der Beaufschlagungseinrichtung geschaltet.

Bei einer weiteren vorteilhaften Ausführungsform weist die Vorrichtung wenigstens ein Druckreservoir bzw. einen Druckspeicher auf und bevorzugt eine Vielzahl von Druckreservoirs bzw. Druckspeichern, in denen das fließfähige Medium unter unterschiedlichen Drücken speicherbar ist. Bevorzugt ist dieses Druckreservoir auf oder an der Transporteinrichtung angeordnet und bewegt sich und insbesondere dreht sich daher mit der Transporteinrichtung mit.

Bevorzugt, handelt es sich bei dem Druckreservoir um einen (insbesondere rohrartigen) Kanal insbesondere einen Ringkanal, der zur Aufnahme des unter Druck stehenden Mediums geeignet ist. Bevorzugt ist daher dieser wenigstens ein Ringkanal dazu ausgebildet und eingerichtet, Druckluft an mehrere Umformungsstationen zu liefern. Zu diesem Zweck kann das Druckreservoir mit Ventileinrichtungen wie etwa einem Ventilblock mit den unterschiedlichen Umformungsstationen in Strömungsverbindung stehen und/oder in Strömungsverbindung bringbar sind.

Bei einer weiteren vorteilhaften Ausführungsform weist die Vorrichtung eine insbesondere stationär angeordnete Druckerzeugungs- oder Druckbereitstellungseinrichtung auf, welche das unter Druck stehende Medium erzeugt und besonders bevorzugt eine Verteileinrichtung, welche das Medium auf ein an der Transporteinrichtung angeordnetes Reservoir leitet.

Bevorzugt steht die Vorrichtung und insbesondere stehen die einzelnen Umformungsstationen (zumindest mittelbar d.h. über weitere Einrichtungen) in Strömungsverbindung mit einem Druckreservoir, bei dem es sich beispielsweise um einen Kompressor oder aber einen Druckanschluss eines Unternehmens handelt. Bevorzugt, handelt es sich bei der Verteileinrichtung, um einen Drehverteiler, der Druckluft auf die einzelnen Ringkanäle und/oder die Umformungsstationen verteilen kann.

Die vorliegende Erfindung ist weiterhin auf ein Verfahren zum Umformen von Kunststoffvorformlingen zu Kunststoffbehältnissen und insbesondere Kunststoffflaschen gerichtet, wobei eine Transporteinrichtung, die Kunststoffvorformlinge entlang eines vorgegebenen Transportpfads transportiert, und wobei mit wenigstens einer an dieser Transporteinrichtung angeordneten Umformungsstation und/oder Umformungseinrichtung die Kunststoffvorformlinge durch Beaufschlagung mit einem fließfähigen und insbesondere gasförmigen Medium zu den Kunststoffbehältnissen umgeformt werden.

Weiterhin weist die Umformungsstation eine Beaufschlagungseinrichtung auf, welche die Kunststoffvorformlinge mit dem fließfähigen Medium beaufschlagt, wobei die Vorrichtung weiterhin eine Druckbereitstellungseinrichtung aufweist und/oder mit einer Druckbereitstellungseinrichtung verbunden ist, welche das fließfähige Medium unter einem vorgegebenen Druck an die Beaufschlagungseinrichtungen zur Verfügung stellt, wobei der von der Druckbereitstellungseinrichtung bereitgestellte Druck größer ist als der zu Beaufschlagung der Kunststoffvorformlinge benötigte und oder verwendete Druck.

Zusätzlich oder alternativ wäre es auch möglich, dass die Umformungsstationen in Strömungsverbindung stehen oder bringbar mit der besagten Druckbereitstellungseinrichtung sind. Damit ist es möglich, dass die Druckbereitstellungseinrichtung wie etwa ein Kompressor Bestandteil der Vorrichtung ist, oder aber lediglich eine Strömungsverbindung mit einer entsprechenden Druckbereitstellungseinrichtung herstellbar ist.

Erfindungsgemäß weist die Vorrichtung wenigstens eine Ventileinrichtung auf, welche die Beaufschlagung der Kunststoffvorformlinge steuert, wobei diese Ventileinrichtung die Zufuhr des fließfähigen Mediums in das Behältnis unterbricht, wenn der Druck des flüssigen Mediums innerhalb des Behältnisses ein vorgegebenes Druckniveau erreicht hat.

Es wird daher auch verfahrensseitig vorgeschlagen, dass der Kunststoffvorformling bzw. das Behältnis mittels einer Druckbereitstellungseinrichtung beaufschlagt wird, welche einen an sich höheren Druck zur Verfügung stellt, als dieser für die Behältnisse bzw. deren Expansion nötig ist.

Mittels eines Ventils bzw. der Ventileinrichtung wird jedoch die Druckluftzufuhr unterbrochen, wenn ein gewünschtes Druckniveau erreicht ist. Bevorzugt wird die Ventileinrichtung mit einer Schaltzeit von weniger als 30 ms bevorzugt weniger als 25 ms bevorzugt weniger als 20 ms bevorzugt weniger als 15 ms geschaltet.

Besonders bevorzugt wird eine Strömungsgeschwindigkeit und oder eine Durchflussmenge des flüssigen Mediums zwischen der Druckbereitstellungseinrichtung und der Beaufschlagungseinrichtung bestimmt. Bevorzugt wird die Ventileinrichtung unter Berücksichtigung des (Innen)drucks und/oder der Strömungsgeschwindigkeit gesteuert und/oder betrieben und/oder geregelt.

Bei einem weiteren bevorzugten Verfahren wird der Kunststoffvorformling und/oder das Kunststoffbehältnis mit mehreren Druckstufen beaufschlagt, wie beispielsweise einem Vorblasdruck, einem Zwischenblasdruck und einen Fertigblasdruck. Bevorzugt nehmen die Drücke mit der Zeit der Beaufschlagung zu, d.h. der Zwischenblasdruck ist bevorzugt größer als der Vorblasdruck und der Fertigblasdruck ist bevorzugt größer als der Zwischenblasdruck.

Bei einem weiteren bevorzugten Verfahren wird wenigstens zeitweise ein Innendruck in dem zu expandierenden, Kunststoffvorformling und/oder Kunststoffbehältnis gemessen und/oder es wird ein Durchfluss des in den Kunststoffvorformling strömenden fließfähigen Mediums erfasst.

Besonders bevorzugt wird eine Aufzeichnung eines Blasdrucks aufgenommen. Diese Aufzeichnung kann dabei insbesondere während des Zeitraums der Umformung des Kunststoffvorformlings erfolgen.

Bevorzugt wird die Ventileinrichtung unter Berücksichtigung des Innendrucks gesteuert. Dabei ist es möglich, dass mehrere Ventileinrichtungen vorgesehen sind, welche die Beaufschlagung des Kunststoffvorformlings oder Kunststoffbehältnisses mit mehreren Druckstufen steuern. Dabei kann eine oder es können auch mehrere diese Ventileinrichtungen unter Berücksichtigung des (momentanen) Innendrucks gesteuert werden.

Bei einem weiteren bevorzugten Verfahren wird der Kunststoffvorformling und/oder das Kunststoffbehältnis mit mehreren Druckstufen beaufschlagt. Besonders bevorzugt wird der Kunststoffvorformling zunächst mit einem Vorblasdruck beaufschlagt, anschließend mit einem Zwischenblasdruck, der bevorzugt höher ist als der Vorblasdruck und schließlich mit einem Fertigblasdruck, der zur vollständigen Ausformung des Kunststoffbehältnisses gegen die Blasform dient.

Die hier beschriebene Schaltung der Ventileinrichtung wird insbesondere bei der höchsten Druckstufe vorgenommen. Es wäre jedoch auch möglich, dass entsprechende (schnell schaltende) Ventileinrichtungen auch für wenigstens eine weitere Druckstufe und bevorzugt für mehrere weitere Druckstufen verwendet werden.

Bei einem weiteren bevorzugten Verfahren wird der Druckverlauf innerhalb eines Zeitraums gemessen, in dem ein Schließen der Ventileinrichtung erfolgt und bevorzugt wird aus diesem Druckverlauf auf das Vorhandensein von Leckagen geschlossen. Verändert sich zum Beispiel nach dem Schließen einer bestimmten Ventileinrichtung beispielsweise eines P2 Ventils, welches für das Fertigblasen dient der Druck und verändert sich dieser insbesondere leicht nach oben, so kann dies auf eine Leckage (der Ventileinrichtung) hindeuten.

Verändert sich über die Betriebszeit die Öffnungszeit einer Ventileinrichtung im Vergleich zu anderen Umformungsstationen (bzw. deren Ventileinrichtungen, so kann bevorzugt die Vorrichtung dies erkennen und insbesondere selbstständig erkennen und bevorzugt eine vorbeugende Wartung dieser Ventileinrichtung anfordern.

Insgesamt kann durch die Erfindung eine Kosteneinsparung erreicht werden und es können sowohl eine oder auch mehrere Reduziereinrichtungen eingespart werden. Daneben kann durch die Erfindung eine Gewichtseinsparung erreicht werden, was wiederum positive Auswirkungen auf Antriebs- und Bremsmomente der Transporteinrichtung bzw. eines Blasrads hat. Daneben ist auch der Innenbereich der Vorrichtung besser zugänglich. Schließlich kann auch der Wartungsaufwand gesenkt werden, insbesondere die Wartung des Doms und auch einen Austausch von Proportionalventilen kann entfallen.

Bei einem bevorzugten Verfahren wird die Öffnungszeit eines Ventils bzw. einer Ventileinrichtung bestimmt. Insbesondere wird die Öffnungszeit bestimmt, um auf einen Effekt der Ventileinrichtung auf den Druckverlauf (insbesondere im Inneren des zu expandierenden Behältnisses) zu schließen.

Bei einem weiteren bevorzugten Verfahren werden die Kunststoffvorformlinge mit einer Vielzahl von Umformungsstation expandiert und diese Umformungsstationen weisen jeweils Ventileinrichtungen auf, welche die Beaufschlagung der Kunststoffvorformlinge steuern. Dabei unterbrechen diese Ventileinrichtungen die Luftzufuhr in das Behältnis, wenn ein Druck des Mediums innerhalb des Behältnisses ein vorgegebenes Druckniveau erreicht hat.

Bei einem weiteren bevorzugten Verfahren werden mehrere Umformungsstationen oder Umformungseinrichtungen von dem gleichen Reservoir versorgt. Wie oben erwähnt, können auch mehrere Reservoirs, insbesondere in Form von Ringkanälen vorgesehen sein und/oder mit mehreren Umformungsstationen verbunden sein.

Weitere verteilen Ausführungsformen ergeben sich aus den beigefügten Zeichnungen: Darin zeigen:
- Fig. 1: eine Darstellung einer Vorrichtung nach dem internen Stand der Technik; und
- Fig. 2: eine Darstellung einer erfindungsgemäßen Vorrichtung.

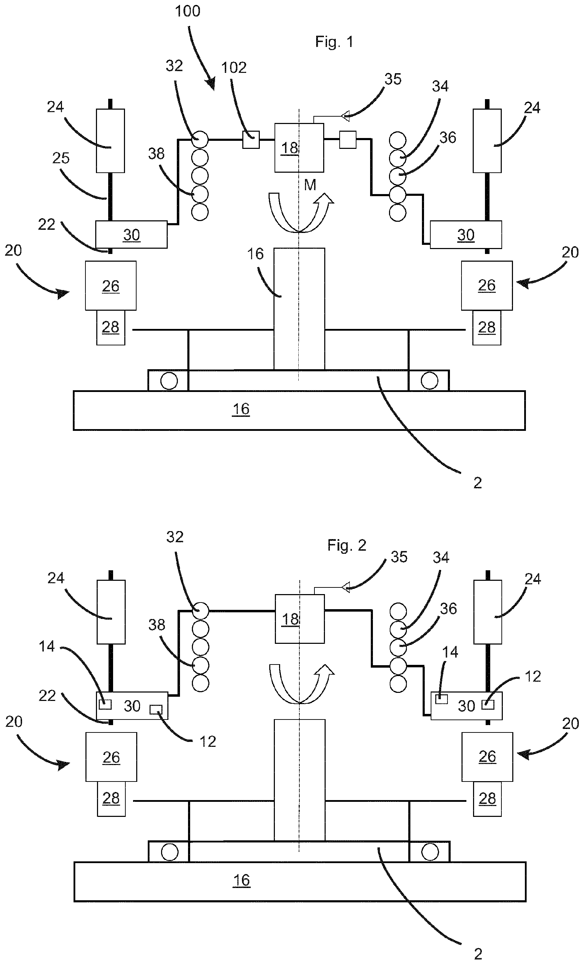

Figur 1 zeigt schematische Darstellung einer Vorrichtung 100 nach dem internen Stand der Technik der Anmelderin. Dabei ist eine schematisch dargestellte und mit dem Bezugszeichen 2 gekennzeichnete Transporteinrichtung vorgesehen, an der eine Vielzahl von Umformungsstationen 20 angeordnet ist. Diese Umformungsstationen 20 weisen dabei jeweils Seitenteile 26 und ein Bodenteil 28 auf, die gemeinsam einen (nicht gezeigten) Hohlraum ausbilden, innerhalb dessen die Kunststoffvorformlinge (nicht gezeigt) zu den Behältnissen geblasen werden. Die Transporteinrichtung ist hierbei (ebenso wie im Falle der Erfindung ein um eine Drehachse M drehbarer Träger.

Das Bezugszeichen 22 kennzeichnet eine Beaufschlagungseinrichtung, welche hier auf eine Mündung der Kunststoffverformung zugestellt wird, um diese mit Druckluft zu beaufschlagen. Das Bezugszeichen 30 kennzeichnet einen Ventilblock, der eine Vielzahl von Ventil aufweist, um den Kunststoffvorformlingen die Druckluft in unterschiedlichen Druckstufen zuzuführen.

Das Bezugszeichen 24 kennzeichnet einen Antrieb für eine Reckstange 25, welche in die Kunststoffvorformline eingeführt wird, um diese in ihrer Längsrichtung zu dienen.

Über eine zentrale Luftversorgung und einen Drehverteiler 18 wird im Stand der Technik die Druckluft auf mehrere Ringkanäle, 32, 34, 36 und 38 verteilt. Das Bezugszeichen 102 kennzeichnet eine Reduziereinrichtung, welche den zugeführten Druck reduziert, um so beispielsweise den Ringkanal 32 zu versorgen. Damit ist dem Stand der Technik in dem Ringkanal die Druckluft in dem benötigten Maße bzw. unter dem benötigten Druck vorhanden. Das Bezugszeichen 16 kennzeichnet einen Träger der Vorrichtung.

Figur 2 zeigt schematisch eine Vorrichtung entsprechend der Erfindung. Man erkennt, dass hier die Reduzierstationen 102 fehlen, d. h. der Ringkanal 32 mit einem größeren Druck versorgt wird, als er eigentlich zum Expandieren der Kunststoffvorformlinge benötigt wird. Der Ventilblock 30 weist jedoch hier wenigstens ein schnell schaltendes Ventil bzw. eine schnell schaltende Ventileinrichtung 12 auf, welche bewirkt, dass die entsprechende Ventileinrichtung geschlossen (bzw. die Luftzufuhr über diese Ventileinrichtung unterbrochen wird, wenn innerhalb des Behältnisses ein bestimmter Druck vorliegt. Zu diesem Zweck wird Innendruck in dem Behältnis mittels einer Messeinrichtung 14 (insbesondere kontinuierlich), bestimmt.

Das Bezugszeichen 35 kennzeichnet eine Druckbereitstellungseinrichtung. Hierbei kann es sich beispielsweise um einen (insbesondere stationär angeordneten) Kompressor handeln oder aber um einen Druckausgang in einer Maschinenhalle.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Umformen von Kunststoffvorformlingen zu Kunststoffbehältnissen und insbesondere Kunststoffflaschen mit einer Transporteinrichtung (2), welche dazu geeignet und bestimmt ist, die Kunststoffvorformlinge entlang eines vorgegebenen Transportpfads zu transportieren, wobei an dieser Transporteinrichtung (2) wenigstens eine Umformungsstation (20) angeordnet ist, welche dazu geeignet und bestimmt ist, die Kunststoffvorformlinge durch Beaufschlagung mit einem gasförmigen Medium zu den Kunststoffbehältnissen umzuformen, wobei die Umformungsstation (20) eine Beaufschlagungseinrichtung (22) aufweist, welche die Kunststoffvorformlinge (10) mit dem fließfähigen Medium beaufschlagt wobei die Vorrichtung (2) weiterhin eine Druckbereitstellungseinrichtung (35) aufweist und/oder mit einer Druckbereitstellungseinrichtung (35) in Strömungsverbindung steht, welche dazu geeignet und bestimmt ist, das fließfähige Medium (4) unter einem vorgegebenen Druck an die Beaufschlagungseinrichtung zur Verfügung zu stellen, wobei der von der Druckbereitstellungseinrichtung (35) bereitgestellte Druck größer ist als der zur Beaufschlagung der Kunststoffvorformlinge benötigte und/oder verwendete Druck,
**dadurch gekennzeichnet, dass**
die Vorrichtung (1) wenigstens eine Ventileinrichtung (12) aufweist, welche die Beaufschlagung der Kunststoffvorformlinge steuert, wobei diese Ventileinrichtung (12) derart gestaltet ist, dass sie die Luftzufuhr in das Behältnis unterbricht, wenn der Druck des fließfähigen Mediums innerhalb des Behältnis ein vorgegebenes Druckniveau erreicht hat.

2. Vorrichtung (1) nach Anspruch 1,
**dadurch gekennzeichnet, dass**
die Vorrichtung (1) wenigstens eine Druckerfassungseinrichtung (14) aufweist, welche einen Druck in dem zu expandierenden Kunststoffvorformling bestimmt.

3. Vorrichtung (1) nach wenigstens einem der vorangegangenen Ansprüche,
**dadurch gekennzeichnet, dass**
die Ventileinrichtung (12) eine Schaltzeit aufweist, die geringer ist als 40ms, bevorzugt geringer als 30ms, bevorzugt geringer als 25ms, bevorzugt geringer als 20ms und besonders bevorzugt geringer als 15ms.

4. Vorrichtung (1) nach wenigstens einem der vorangegangenen Ansprüche,
**dadurch gekennzeichnet, dass**
die Vorrichtung eine Drucksteuerungseinrichtung (30) aufweist, welche dazu geeignet ist, den Kunststoffvorformling mit mehreren unterschiedlichen Druckstufen zu beaufschlagen.

5. Vorrichtung (1) nach wenigstens einem der vorangegangenen Ansprüche,
**dadurch gekennzeichnet, dass**
die Vorrichtung wenigstens ein Druckreservoir (32, 34, 36, 38) und bevorzugt eine Vielzahl von Druckreservoirs (32, 34, 36, 38) aufweist, in denen das fließfähige Medium unter unterschiedlichen Drücken speicherbar ist.

6. Vorrichtung (1) nach wenigstens einem der vorangegangenen Ansprüche,
**dadurch gekennzeichnet, dass**
die Vorrichtung eine insbesondere stationär angeordnete Druckbereitstellungseinrichtung (35) aufweist, welche das unter Druck stehende Medium erzeugt und bevorzugt eine Verteileinrichtung (18), welche das Medium auf ein an der Transporteinrichtung angeordnetes Reservoir (32, 34, 36, 38) leitet.

7. Verfahren zum Umformen von Kunststoffvorformlingen zu Kunststoffbehältnissen und insbesondere Kunststoffflaschen, wobei eine Transporteinrichtung (2), die Kunststoffvorformlinge entlang eines vorgegebenen Transportpfads zu transportiert, und wobei mit einer an dieser Transporteinrichtung (2) angeordneten Umformungsstation (20) die Kunststoffvorformlinge durch Beaufschlagung mit einem gasförmigen Medium zu den Kunststoffbehältnissen umgeformt werden, wobei die Umformungsstation (20) eine Beaufschlagungseinrichtung (22) aufweist, welche die Kunststoffvorformlinge (10) mit dem fließfähigen Medium beaufschlagt wobei die Vorrichtung (2) weiterhin eine Druckbereitstellungseinrichtung (35) aufweist und/oder mit einer Druckbereitstellungseinrichtung in Strömungsverbindung steht, welche das fließfähige Medium (4) unter einem vorgegebenen Druck an die Beaufschlagungseinrichtung zur Verfügung stellt, wobei der von der Druckbereitstellungseinrichtung bereitgestellte Druck größer ist als der zur Beaufschlagung der Kunststoffvorformlinge benötigte und/oder verwendete Druck,
**dadurch gekennzeichnet, dass**
die Vorrichtung wenigstens eine Ventileinrichtung (12) aufweist, welche die Beaufschlagung der Kunststoffvorformlinge steuert, wobei diese Ventileinrichtung die Luftzufuhr in das Kunststoffbehältnis unterbricht, wenn der Druck des fließfähigen Mediums innerhalb des Kunststoffbehältnis ein vorgegebenes Druckniveau erreicht hat.

8. Verfahren nach dem vorangegangenen Anspruch,
**dadurch gekennzeichnet, dass**
wenigstens zeitweise ein Innendruck in dem zu expandierenden Kunststoffvorformling oder Kunststoffbehältnis und/oder ein Durchfluss des in den Kunststoffvorformling strömenden fließfähigen Mediums erfasst wird.

9. Verfahren nach dem vorangegangenen Anspruch,
**dadurch gekennzeichnet, dass**
die Ventileinrichtung unter Berücksichtigung des Innendrucks gesteuert wird.

10. Verfahren nach wenigstens einem der vorangegangenen Ansprüche,
**dadurch gekennzeichnet, dass**
der Kunststoffvorformling und/oder das Kunststoffbehältnis mit mehreren Druckstufen beaufschlagt wird.

11. Verfahren nach wenigstens einem der vorangegangenen Ansprüche,
**dadurch gekennzeichnet, dass**
ein Druckverlauf innerhalb eines Zeitraums gemessen wird, in dem ein Schließen der Ventileinrichtung erfolgt und bevorzugt aus diesem Druckverlauf auf das Vorhandensein von Leckagen geschlossen wird.

12. Verfahren nach wenigstens einem der vorangegangenen Ansprüche,
**dadurch gekennzeichnet, dass**
eine Öffnungszeit der Ventileinrichtung bestimmt wird.

13. Verfahren nach wenigstens einem der vorangegangenen Ansprüche,
**dadurch gekennzeichnet, dass**
die Kunststoffvorformlinge mit einer Vielzahl von Umformungsstationen expandiert werden und diese Umformungsstationen jeweils Ventileinrichtungen (12) aufweisen, welche die Beaufschlagung der Kunststoffvorformlinge steuern, wobei diese Ventileinrichtungen die Luftzufuhr in das Behältnis unterbrechen, wenn der Druck des fließfähigen Mediums innerhalb des Behältnis ein vorgegebenes Druckniveau erreicht hat.
